# EUROPEAN PATENT APPLICATION

(11) **EP 2 662 949 A1**
(43) Date of publication of application: **13.11.2013**
(21) Application number: 11855005.2
(22) Date of filing: 28.12.2011
(51) Int. Cl.: H02J 7/02, B60L 11/18, H01M 10/42, H01M 10/48, H02J 7/00

(54) **CHARGING CONTROL DEVICE, CHARGING CONTROL METHOD, AND PROGRAM**

(30) Priority: 06.01.2011 JP 2011001303
(71) Applicant: NEC Corporation, Tokyo 108-8001 (JP)
(72) Inventor: JIKIHARA, Takashi, Tokyo 108-8001 (JP)
(74) Representative: Günther, René
(86) International application number: PCT/JP2011/080426
(87) International publication number: WO 2012/093638

(57) **Abstract**

A charging control device includes: a remaining charge acquisition unit 101 that obtains a remaining charge of a rechargeable battery for an electric vehicle; a lifespan information acquisition unit 104 that obtains lifespan information expressing a degree of deterioration of the rechargeable battery; an environmental information acquisition unit 105 that obtains information indicating a peripheral temperature of the electric vehicle; and a charging plan updating unit 106 that creates a charging plan including a target remaining charge of the rechargeable battery and a charging process up to achievement of the target remaining charge. The charging plan updating unit 106 determines whether or not to create the charging plan in consideration of the deterioration of the rechargeable battery on the basis of the lifespan information, and after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.

## Description

### BACKGROUND

The present invention relates to a charging control device, a charging control method, and a program.

In recent years, electric vehicles such as electric automobiles that use a rechargeable battery as a power supply have begun to increase in popularity. To advance the popularization of electric vehicles, it is essential to improve charging facilities for rechargeable batteries.

Patent Document 1 describes a charging control device that controls charging of storage devices installed respectively in a plurality of vehicles from an external power supply individually, wherein a main control ECU detects a storage condition of each storage device when a vehicle installed with the storage device is connected to the external power supply, detects a predicted power consumption of each of the plurality of vehicles, calculates a required amount of charged power for each vehicle on the basis of the detected storage condition and the predicted power consumption, detects a use start time of each vehicle, determines a charging schedule relating to a charging time and the amount of charged power of each vehicle from the required charging amount and the use start time, and controls charging of the storage device installed in the vehicle on the basis of the charging schedule.

Patent Document 1: Patent Publication JP-A-2009-136109

In the case of a lithium ion battery serving as a representative rechargeable battery, if the rechargeable battery is left in a high-temperature environment while a remaining charge is high or the remaining charge is varied rapidly, the rechargeable battery deteriorates quickly. Patent Document 1, however, does not describe a charging plan that takes into consideration the prevention of deterioration of the rechargeable battery.

### SUMMARY

It is therefore an exemplary object of the present invention to provide a charging control device, a charging control method, and a program with which a rechargeable battery can be charged while taking into consideration the prevention of deterioration of the rechargeable battery.

A charging control device according to the present invention includes: a remaining charge acquisition unit that obtains a remaining charge of a rechargeable battery for an electric vehicle; a lifespan information acquisition unit that obtains lifespan information expressing a degree of deterioration of the rechargeable battery; an environmental information acquisition unit that obtains information indicating a peripheral temperature of the electric vehicle; and a charging plan updating unit that creates a charging plan including a target remaining charge of the rechargeable battery and a charging process up to achievement of the target remaining charge, wherein the charging plan updating unit determines whether or not to create the charging plan in consideration of the deterioration of the rechargeable battery on the basis of the lifespan information, and after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.

According to an exemplary aspect of the present invention, a rechargeable battery can be charged while taking into consideration the prevention of deterioration of the rechargeable battery.

### DESCRIPTION OF THE DRAWINGS

Fig. 1 is a block diagram showing a configuration of a system employing a charging control device according to an embodiment of the present invention;
Fig. 2 is a block diagram showing a configuration of the charging control device according to this embodiment of the present invention;
Fig. 3 is a flowchart illustrating procedures of charging control executed by the charging control device according to this embodiment of the present invention;
Fig. 4 is a flovirchart illustrating processing executed by a charging plan updating unit to create and update a charging plan and a resource plan, according to this embodiment of the present invention;
Fig. 5 is a view showing an example of charging plan creation according to this embodiment of the present invention;
Fig. 6 is a view showing an example of charging plan creation according to this embodiment of the present invention;
Fig. 7 is a view showing an example of charging plan creation according to this embodiment of the present invention;
Fig. 8 is a view showing an example of the resource plan according to this embodiment of the present invention;
Fig. 9 is a view showing an example of the resource plan according to this embodiment of the present invention;
Fig. 10 is a view showing an example of the resource plan according to this embodiment of the present invention;
Fig. 11 is a view showing an example of the resource plan according to this embodiment of the present invention;
Fig. 12 is a view showing an example of the resource plan according to this embodiment of the present invention; and
Fig. 13 is a view showing an example of the resource plan according to this embodiment of the present invention.

### EXEMPLARY EMBODIMENT

Next, an exemplary embodiment of the present invention will be described in detail with reference to the drawings.

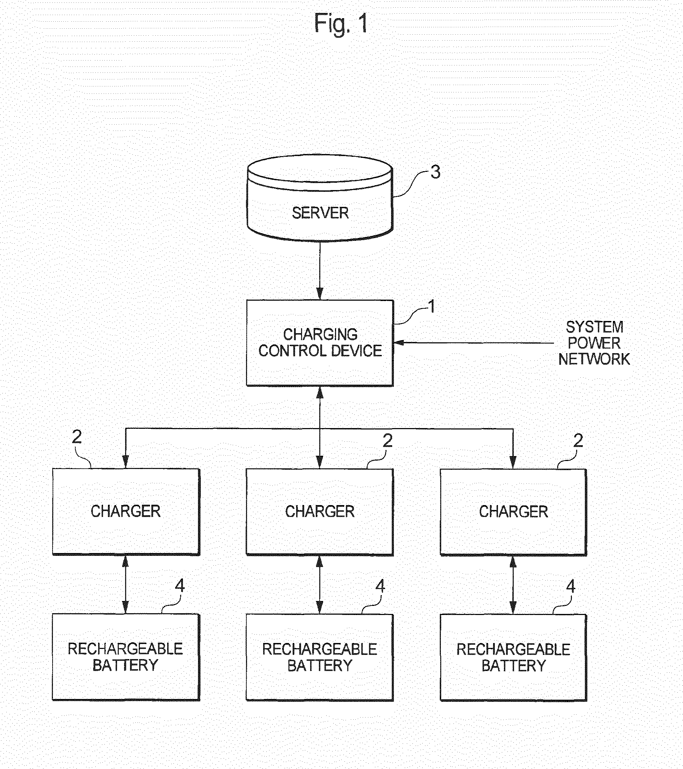

Fig. 1 is a block diagram showing a configuration of a charging system employing a charging control device 1 according to an embodiment of the present invention. As shown in the drawing, the charging control device 1 is connected to chargers 2 and a server 3 via a communication line. Rechargeable batteries 4 are connected respectively to the chargers 2 so as to be charged thereby. In the system shown in Fig. 1, three rechargeable batteries 4 can be charged simultaneously.

The charging control device 1 supplies power to the respective rechargeable batteries 2 within a range that does not exceed a maximum power supply from a system power network on the basis of information obtained from the chargers 2 and the server 3. The charger 2 charges the rechargeable battery 4 connected thereto using the power supplied from the charging control device 1. Further, the charger 2 obtains information such as a remaining charge of the rechargeable battery 4 connected thereto, and transmits the obtained information to the charging control device 1. Furthermore, a sensor or the like for obtaining environment-related information such as a peripheral temperature of the rechargeable battery 4 is provided in the interior of the charger 2, and the charger 2 also transmits this information to the charging control device 1.

The server 3 provides the charging control device 1 with information required to predict a power consumption of the rechargeable battery 4, information required to predict a time at which use of an electric vehicle currently being charged will begin, and information relating to a lifespan of the battery.

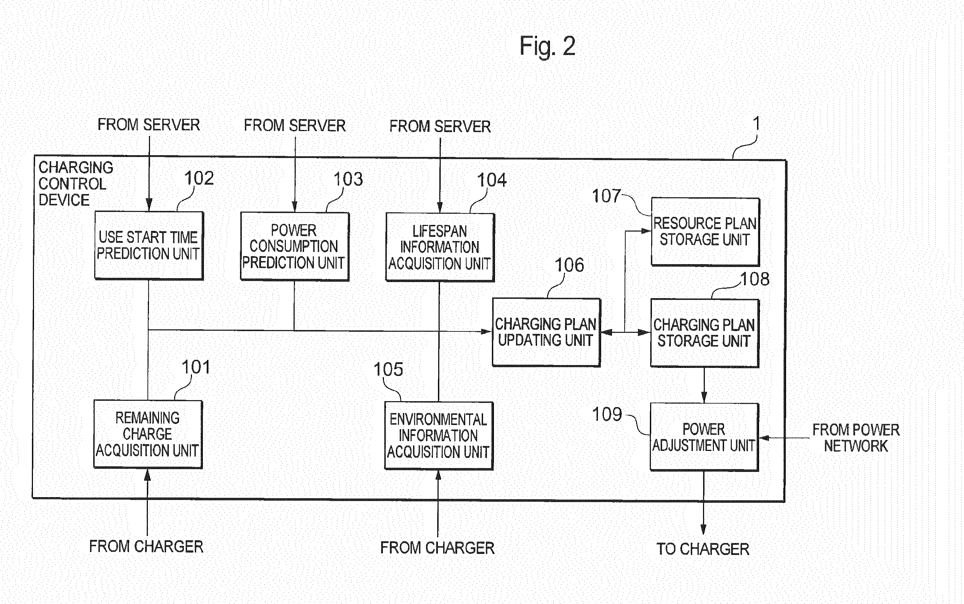

Fig. 2 is a block diagram showing a functional configuration of the charging control device 1.
As shown in the drawing, the charging control device 1 includes a remaining charge acquisition unit 101, a use start time prediction unit 102, a power consumption prediction unit 103_{,} a lifespan information acquisition unit 104, an environmental information acquisition unit 105, a charging plan updating unit 106, a resource plan storage unit 107, a charging plan storage unit 108, and a power adjustment unit 109.

A specialized or general-purpose computer including a CPU, memory such as a ROM and a RAM, an external storage device for storing various types of information, an input interface, an output interface, a communication interface, and a bus connecting these components may be used as the charging control device 1. The charging control device 1 may be constituted by a single computer or a plurality of computers connected to each other via a communication line.

The remaining charge acquisition unit 101, the use start time prediction unit 102, the power consumption prediction unit 103, the lifespan information acquisition unit 104, the environmental information acquisition unit 105, the charging plan updating unit 106, and the power adjustment unit 109 correspond to functional modules realized by having the CPU execute a predetermined program stored in the ROM or the like. The resource plan storage unit 107 and the charging plan storage unit 108 are packaged in the external storage device.

The remaining charge acquisition unit 101 obtains a remaining charge of the rechargeable battery 4 connected to the charger 2. The remaining charge acquisition unit 101 obtains the remaining charge of the rechargeable battery 4 after receiving notification from the charger 2 that the rechargeable battery 4 has been connected, and transmits the obtained remaining charge to the charging plan updating unit 106. The remaining charge acquisition unit 101 may also obtain the remaining charge of the rechargeable battery 4 at fixed time intervals. Further, in a case where information indicating the remaining charge is stored in the rechargeable battery 4 itself, the remaining charge acquisition unit 101 may obtain the remaining charge directly from the rechargeable battery 4.

The use start time prediction unit 102 predicts a time at which use of the electric vehicle currently being charged will next start. The use start time prediction unit 102 obtains information relating to a user of the vehicle from the server 3, and predicts the time at which the user will next start to use the electric vehicle on the basis of this information. More specifically, for example, the use start time prediction unit 102 may obtain history information indicating past use start times and positions of the vehicle, and determine an average use start time. Alternatively, the use start time prediction unit 102 may obtain schedule information input by the user him/herself, and retrieve a time of a following journey from this information. The time at which the user will start to use the electric vehicle may also be predicted by applying another preferred method to the information relating to the user of the vehicle. A prediction result is transmitted to the charging plan updating unit 106.

The power consumption prediction unit 103 predicts an amount of power to be consumed by the electric vehicle during the following journey, or in other words up to a following charging operation. The power consumption prediction unit 103 obtains information relating to a use plan and a use history of the electric vehicle from the server 3, and predicts the amount of power to be consumed by the user during the next use of the electric vehicle on the basis of this information. A prediction result is transmitted to the charging plan updating unit 106. For example, the power consumption prediction unit 103 may obtain a history of GPS information generated by the user during a past use of the electric vehicle, and predict the amount of power to be consumed from a total traveled distance at that time.

Alternatively, the power consumption prediction unit 103 may obtain the schedule information input by the user him/herself, retrieve a planned journey from this information, calculate a travel distance required to reach a destination, and predict the power consumption from the calculated travel distance. Further, a travel log of the electric vehicle may be used. The travel log includes information such as a speed and a traveled distance during use of the vehicle, a time of vehicle use, and height differences along a traveled route. By taking into consideration the height differences along the traveled route in addition to the speed and traveled distance information, the power consumption can be predicted more accurately.

The lifespan information acquisition unit 104 obtains lifespan information relating to the rechargeable battery 4 connected to the charger 2. The lifespan information is information expressing a degree of deterioration of the rechargeable battery 4. More specifically, an internal resistance value of the rechargeable battery 4, a number of past charging operations performed on the rechargeable battery 4, a log of voltage variation during previous uses, and so on may be used as the lifespan information. The lifespan information acquisition unit 104 obtains statistical information and the like relating to the remaining charge of the rechargeable battery during charging from the server 3, generates the lifespan information of the rechargeable battery 4 from this information, and transmits the lifespan information to the charging plan updating unit 106. Note that when lifespan information such as an upper limit number of charging operations is stored in the rechargeable battery 4 itself, the lifespan information may be obtained from the rechargeable battery 4 directly rather than via the server 3.

The environmental information acquisition unit 105 obtains information relating to the environment of the battery, such as a peripheral temperature of the rechargeable battery 4, from the charger 2, and transmits the information to the charging plan updating unit 106. More specifically, information such as air temperature, humidity, and weather conditions at a charging location is obtained. Information such as an amount of sunlight, a wind direction, and an amount of rainfall may also be obtained.

The charging plan updating unit 106 creates a charging plan for each charger 2, and updates the resource plan storage unit 107 and the charging plan storage unit 108. The charging plan updating unit 106 creates the charging plan on the basis of the remaining charge of the rechargeable battery 4 obtained from the remaining charge acquisition unit 101, the use start time of the electric vehicle obtained from the use start time prediction unit 102, the power consumption obtained from the power consumption prediction unit 103, the lifespan information of the rechargeable battery 4 obtained from the lifespan information acquisition unit 104, and the environmental information obtained by the environmental information acquisition unit 105 so that the rechargeable battery 4 reaches a target remaining charge before the use start time of the electric vehicle.

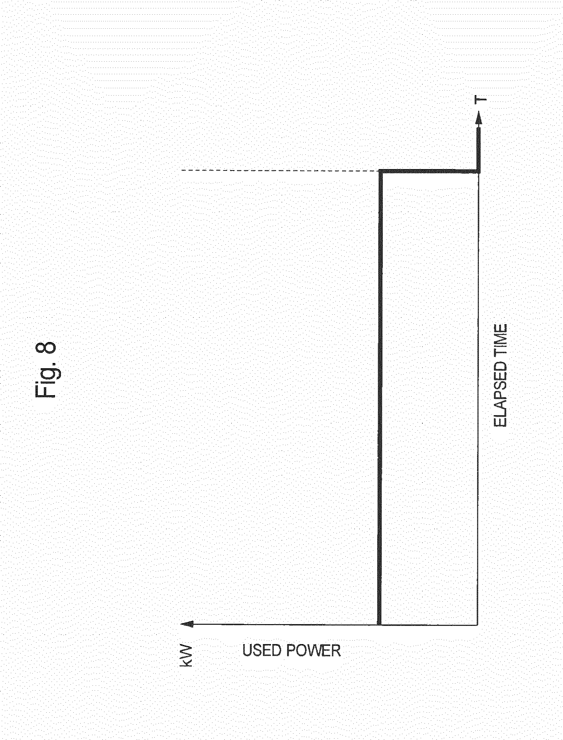

The resource plan storage unit 107 stores a resource plan indicating a relationship between a total amount of power to be used by all of the chargers 2 connected to the charging control device 1 and time. The resource plan is created by the charging plan updating unit 106, and may take the form of graph data such as those shown in Figs. 8 to 13, for example.

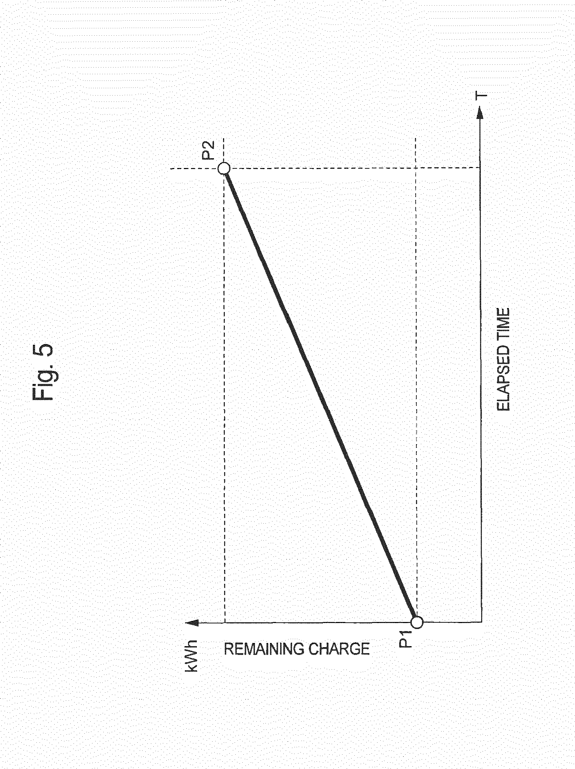

The charging plan storage unit 108 stores the charging plans of the rechargeable batteries 4 connected to the chargers 2. The charging plan includes a post-charging target remaining charge of the rechargeable battery 4 and a charging process up to achievement of the target remaining charge. The charging plan may take the form of graph data such as those shown in Figs. 5 to 7, for example. The charging plan is created by the charging plan updating unit 106 for each charger and transmitted to the power adjustment unit 109.

The power adjustment unit 109 distributes the power supplied from the power network to the respective chargers 2 in accordance with the charging plans of the respective chargers 2.

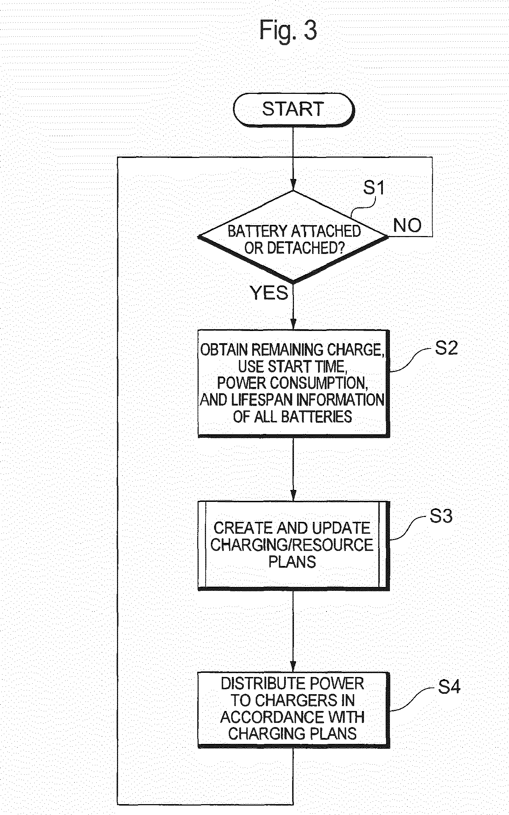

Next, using Fig. 3, procedures of charging control executed by the charging control device 1 will be described.
First, in Step S1, the charging control device 1 performs monitoring to determine whether a rechargeable battery 4 has been connected to or detached from the charger 2. When a rechargeable battery 4 has been attached or detached (Yes), the processing advances to Step S2.

In Step S2, the charging control device 1 obtains the remaining charge, use start time, power consumption, and lifespan information of all of the rechargeable batteries 4 connected to the chargers 2.

In Step S3, the charging control device 1 creates the charging plans. Further, in Step S4, the charging control device 1 distributes power to the respective chargers 2 in accordance with the created charging plans.

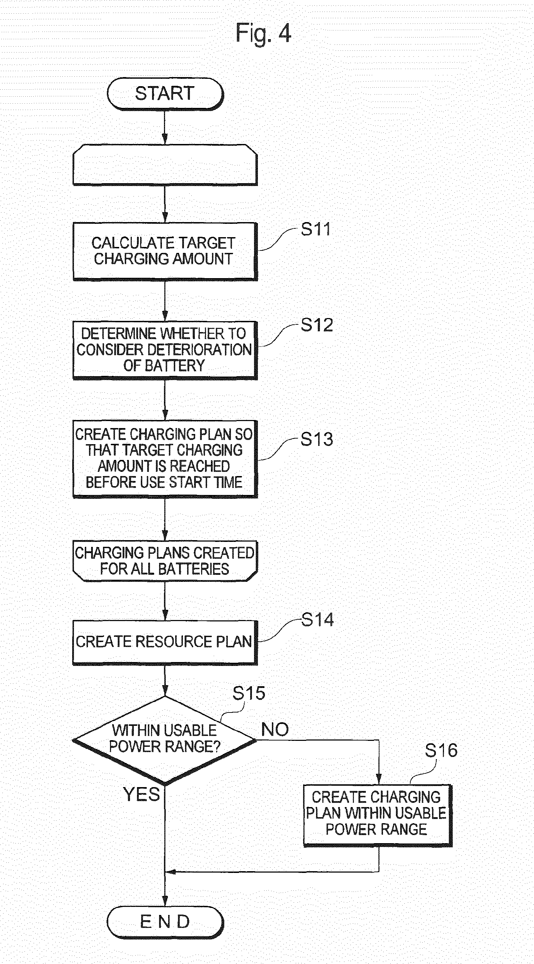

Next, using Fig. 4, procedures executed by the charging plan updating unit 106 to create the charging plans will be described.
First, in Step S11, the target remaining charge of the rechargeable battery 4 is calculated on the basis of the remaining charge and the predicted power consumption of the rechargeable battery 4. For example, the target remaining charge may be obtained by adding a remaining charge corresponding to the predicted power consumption to a current remaining charge of the rechargeable battery 4. Alternatively, the target remaining charge may be set at a larger value, taking into account self-discharge of the rechargeable battery 4. Note that when the calculated target remaining charge is larger than a chargeable capacity of the rechargeable battery 4, the capacity of the rechargeable battery 4 is set as the target remaining charge.

Next, in Step S12, a determination is made on the basis of the lifespan information of the rechargeable battery 4 as to whether or not to perform charging while taking the deterioration of the rechargeable battery 4 into account. More specifically, it may be determined that charging is to be performed while taking the deterioration into account when the internal resistance of the rechargeable battery 4 equals or exceeds a fixed value. Alternatively, whether or not the number of charging operations of the rechargeable battery 4 equals or exceeds a fixed number, whether or not a voltage reduction speed during a previous use equals or exceeds a fixed value, and so on may be used as a determination reference.

Further, the determination as to whether or not to perform charging while taking the deterioration of the rechargeable battery 4 into account may be made in consideration of information other than the lifespan information of the rechargeable battery 4 itself. For example, it may be determined that charging is to be performed while taking the deterioration of the rechargeable battery 4 into account when a period from a current time to the use start time equals or exceeds a fixed period, or when the peripheral temperature of the charger 2 equals or exceeds a fixed temperature. The determination as to whether or not to perform charging while taking the deterioration of the rechargeable battery 4 into account may also be made using other factors linked to deterioration of the rechargeable battery 4. Furthermore, the user may choose whether or not to perform charging while taking the deterioration of the rechargeable battery 4 into account.

Next, in Step S13, a charging plan with which the target remaining charge is reached before the use start time of the electric vehicle is created. When it is determined in Step S12 to perform charging while taking the deterioration of the rechargeable battery 4 into account, the charging plan updating unit 106 creates the charging plan such that when the peripheral temperature of the electric vehicle, obtained via the environmental information acquisition unit 105, equals or exceeds a predetermined value, the remaining charge of the rechargeable battery 4 is maintained at or below a predetermined value for as long as possible during the charging period.

It is known that when a rechargeable battery is left in a high-temperature location in a condition where the remaining charge thereof is high, the rechargeable battery deteriorates quickly. Therefore, when the peripheral temperature is high, charging is preferably performed by keeping the remaining charge small for as long as possible such that the target remaining charge is reached immediately before the use start time of the electric vehicle.

The charging plan will now be described more specifically using examples shown in Figs. 5 to 7. Figs. 5 to 7 are graphs showing an elapsed time on the abscissa and the remaining charge of the rechargeable battery on the ordinate. In the drawings, P1 represents a condition of the rechargeable battery at the start of charging and P2 represents a condition of the rechargeable battery at the use start time of the electric vehicle (when charging is complete).

A coordinate of P1 on the ordinate corresponds to the current remaining charge of the battery, obtained by the remaining charge acquisition unit 101. A coordinate of P2 on the abscissa corresponds to the use start time of the electric vehicle, obtained from the use start time prediction unit 102, while a coordinate of P2 on the ordinate corresponds to the post-charging target remaining charge.

In the example shown in Fig. 5, P1 and P2 are linked by a straight line. In this example, charging is performed continuously at a constant fixed charging speed up to the use start time. Note that the line linking P1 and P2 may be a monotonically increasing curve rather than a straight line.

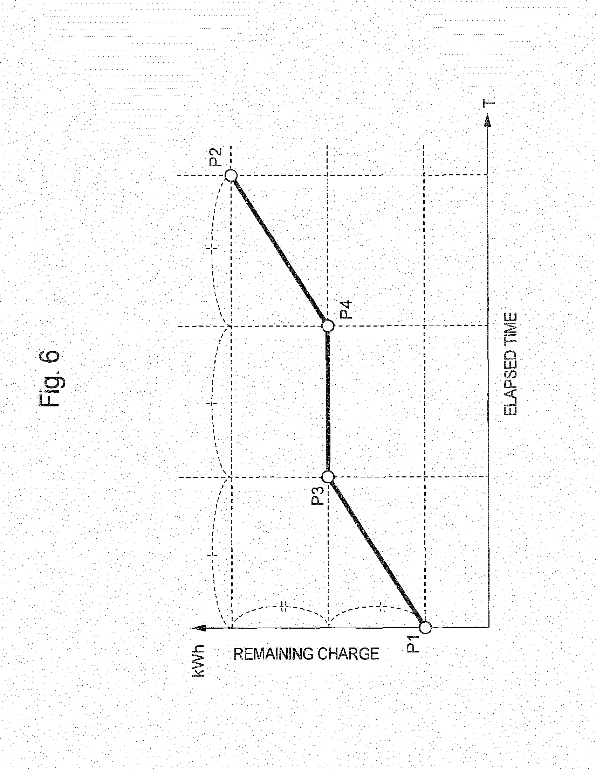

In the example shown in Fig. 6, a period (P3-P4) in which charging is not performed is provided between P1 and P2. In the example of Fig. 6, intersections between a straight line bisecting P1-P2 in an ordinate direction and two straight lines trisecting P1 and P2 in an abscissa direction are set respectively as P3 and P4, and P1, P3, P4, P2 are joined by line segments. Note that a number of periods in which charging is not performed may be increased. Further, during the charging periods, charging need not be performed at a fixed charging speed.

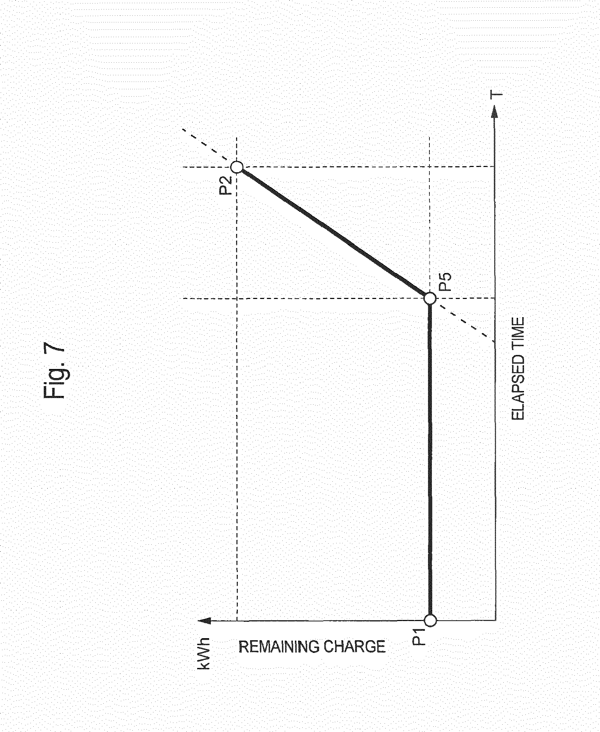

In the example shown in Fig. 7, a charging start time (P5) is calculated from the charging time required for the rechargeable battery to reach the target remaining charge so that charging is completed exactly at the use start time, and charging is not performed until the charging start time. In the example of Fig. 7, a straight line expressing a relationship between the elapsed time and the remaining charge of the rechargeable battery 4 when the charger 2 outputs a maximum amount of power that can be output thereby is drawn so as to pass through P2, a point at which the remaining charge of the rechargeable battery becomes equal to P1 is set as P5, and P1, P5, P2 are joined by a straight line serving as the charging start time. Note that the charging start time may be determined on the assumption that charging will be performed using a smaller amount of power than the maximum output of the charger 2.

In the example of Fig. 7, the remaining charge of the rechargeable battery 4 is not increased during the period up to P5, and therefore, in comparison with the examples shown in Figs. 5 and 6, a condition in which the remaining charge of the rechargeable battery 4 is equal to P1 is maintained for a maximum length of the charging period. Hence, in the example of Fig. 7, a condition in which the remaining charge is small can be maintained for a long time, and therefore this example corresponds to a suitable charging plan for a case in which the peripheral temperature is high.

When the peripheral temperature of the electric vehicle equals or exceeds the predetermined value, the charging plan updating unit 106 preferably creates a charging plan such as that shown in Fig. 7.

As is evident from Figs. 5 to 7, a time average of the remaining charge of the rechargeable battery 4 during the charging period is smaller in the example of Fig. 7 than in the examples of Figs. 5 and 6. Therefore, by determining a predetermined remaining charge threshold on the basis of the peripheral temperature of the electric vehicle and creating the charging plan so that the time average of the remaining charge of the rechargeable battery 4 during the charging period does not exceed the remaining charge threshold, for example, deterioration of the rechargeable battery can be prevented from advancing even under a different charging plan to the charging plan shown in Fig. 7. For example, as long as the time average of the remaining charge does not exceed the remaining charge threshold, a continuous charging plan such as that shown in Fig. 5 or an intermittent charging plan such as that shown in Fig. 6 may be used.

With the charging plan shown in Fig. 7, on the other hand, deterioration of the rechargeable battery advances when variation in the remaining charge per unit time (i.e. an incline of the straight line P5-P2) is too large. Therefore, when, after calculating the charging start time (P5) from the charging time required for the rechargeable battery to reach the target remaining charge, the variation in the remaining charge (the incline of the straight line P5-P2) is found to exceed a predetermined threshold, the charging plan updating unit 106 may recreate the charging plan such that the charging start time of P5 is brought forward. Alternatively, the remaining charge may be varied less rapidly by providing a period in which charging is not performed, as in the charging plan shown in Fig. 6. Further, the threshold may be determined on the basis of the lifespan information of the rechargeable battery.

The processing of Step S11 to Step S13 is performed on all of the rechargeable batteries 4 connected to the chargers 2. When charging plans have been created for all of the rechargeable batteries 4, the charging plan updating unit 106 creates the resource plan in Step S14 on the basis of all of the created charging plans.

The resource plan will now be described using Figs. 8 to 13. It is assumed, for example, that a rechargeable battery 4 is connected only to a first charger 2, and that the charging plan for the first charger 2 is that shown in Fig. 5. In this case, a relationship between the elapsed time and a used power for executing the charging plan of Fig. 5 is expressed in the form of a graph shown in Fig. 8. The abscissa on Fig. 8 shows the elapsed time, and the ordinate shows the power used by the charger. Hence, the resource plan in a case where a rechargeable battery 4 is connected only to the first charger 2 is as shown in Fig. 8.

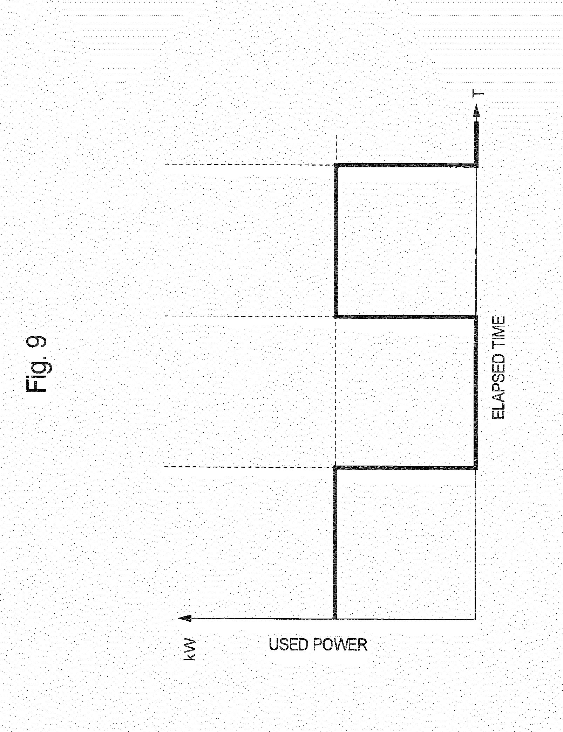

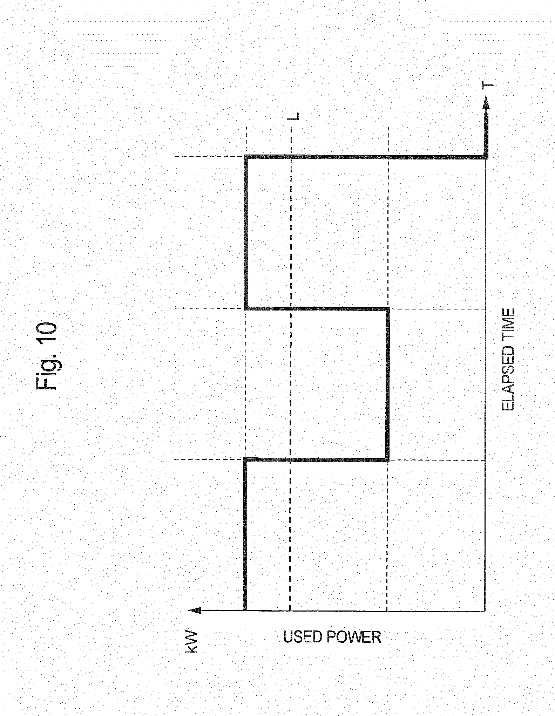

It is now assumed that a new rechargeable battery 4 is connected to a second charger 2, and that the charging plan for the second charger 2 is that shown in Fig. 6. The relationship between the elapsed time and the used power for executing the charging plan of Fig. 6 is expressed in the form of a graph shown in Fig. 9. Hence, on the resource plan for charging the first and second rechargeable batteries 4, the used power is a total amount of power used by the two chargers 2, and therefore this resource plan takes a form shown in Fig. 10.

In Step S15, the charging plan updating unit 106 determines whether or not the created resource plan satisfies a usable power amount condition. The usable power amount is an agreed power amount or an amount of power that can be supplied by the power network, for example. Alternatively, the usable power amount may be obtained by subtracting an amount of power used by devices other than the chargers 2 from the amount of power that can be supplied by the power network.

On the resource plan of Fig. 10, for example, when L is set as the maximum usable power amount and a period in which the used power exceeds an L line exists, the charging plan updating unit 106 determines that the created resource plan does not satisfy the usable power amount condition (No), and then advances to Step S16. When a period in which the used power exceeds L does not exist, on the other hand, the charging plan updating unit 106 determines that the created resource plan satisfies the usable power amount condition (Yes), updates the charging plan storage unit 108 and the resource plan storage unit 107, and then transmits the charging plans to the power adjustment unit 109, whereupon the processing is terminated.

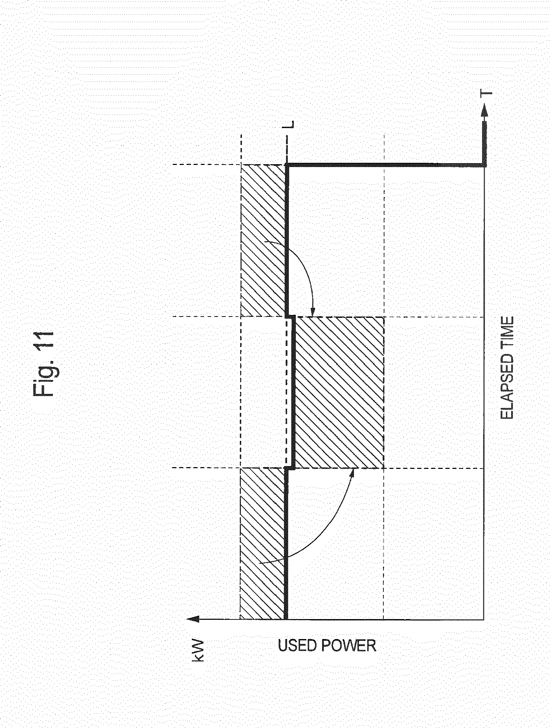

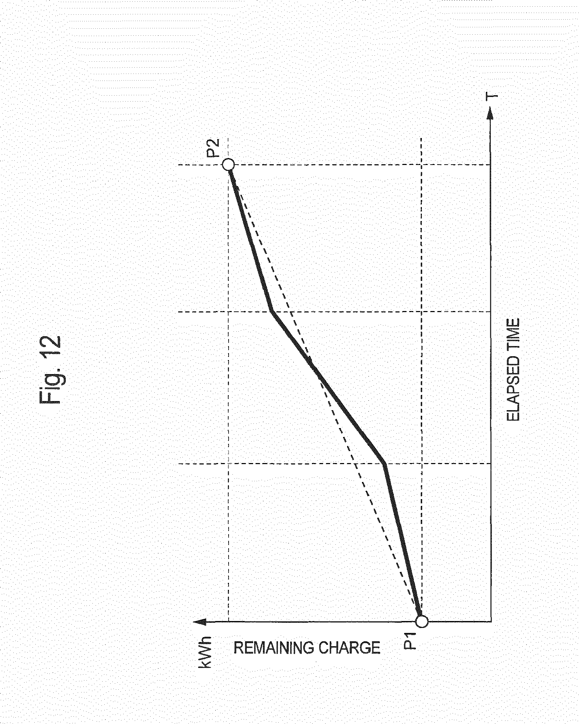

In Step S16, the charging plan updating unit 106 modifies the resource plan so that the resource plan satisfies the usable power amount condition, and then recreates charging plans in accordance with the modified resource plan. As shown in Fig. 11, for example, the part of the power that exceeds L on the resource plan of Fig. 10 may be shifted to another period having leeway in the power amount. The charging plan updating unit 106 recreates the charging plan for the first charger 2 on the basis of the modified resource plan. As a result, the charging plan is modified from the graph shown in Fig. 5 to a graph shown by a solid line in Fig. 12.

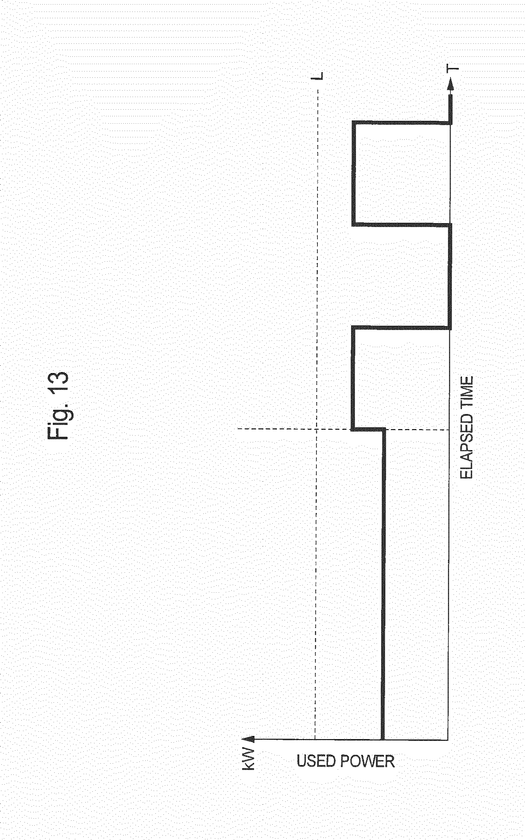

The resource plan may also be modified as shown in Fig. 13. In the example of Fig. 13, instead of charging the two rechargeable batteries 4 simultaneously, the second rechargeable battery 4 is charged when charging of the first rechargeable battery 4 is complete. In so doing, the charging plan for the first charger does not have to be modified and only the charging start time is modified on the charging plan for the second charger.

After recreating the charging plans, the charging plan updating unit 106 updates the charging plan storage unit 108 and the resource plan storage unit 107 and then transmits the charging plans of the respective chargers 2 to the power adjustment unit 109, whereupon the processing is terminated.

The power adjustment unit 109 distributes the power supplied from the power network to the respective chargers 2 in accordance with the received charging plans of the respective chargers 2.

According to this embodiment, as described above, the charging plan can be created while taking into consideration the prevention of deterioration of the rechargeable battery for the electric vehicle. In particular, a situation in which the rechargeable battery is left for a long time in a high-temperature location when the remaining charge thereof is high can be avoided.

Further, according to this embodiment, the charging plan can be created on the basis of the resource plan that takes into account the usable power amount, and therefore a plurality of rechargeable batteries can be charged simultaneously.

The present invention may be used to perform charging while taking into consideration the prevention of deterioration of a rechargeable battery for an electric vehicle in a household having an electric automobile charger, a commercial establishment such as a shopping center, a gas station, or a convenience store, a community center or an administrative institution, or a public facility such as a hospital. The present invention may also be used in a case where power not exceeding an agreed power amount is supplied to a plurality of chargers. Further, the present invention may be used as means for supplying power not exceeding an agreed power amount to chargers for electric automobiles located in various locations from an identical power supply source by remotely controlling the respective chargers.

This application claims priority based on Japanese Patent Application No. 2011-1303, filed on January 6, 2011, the entire contents of which are incorporated herein.

The present invention was described above with reference to embodiments thereof, but the present invention is not limited to the above embodiments, and various modifications that can be understood by a person skilled in the art may be implemented in relation to the configurations and details of the present invention within the scope of the present invention.

All or a part of the embodiments described above may be described as in the following notes, but the embodiments are not limited thereto.

### (Note 1)

A charging control device including:
a remaining charge acquisition unit that obtains a remaining charge of a rechargeable battery for an electric vehicle;
a lifespan information acquisition unit that obtains lifespan information expressing a degree of deterioration of the rechargeable battery;
an environmental information acquisition unit that obtains information indicating a peripheral temperature of the electric vehicle; and
a charging plan updating unit that creates a charging plan including a target remaining charge of the rechargeable battery and a charging process up to achievement of the target remaining charge,
wherein the charging plan updating unit determines whether or not to create the charging plan in consideration of the deterioration of the rechargeable battery on the basis of the lifespan information, and
after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.

### (Note 2)

The charging control device according to Note 1, further including a use start time prediction unit that predicts a use start time of the electric vehicle,
wherein, when the charging plan updating unit determines to take the deterioration of the rechargeable battery into consideration and the temperature is equal to or higher than the predetermined value, the charging plan updating unit calculates a charging start time from a charging time required for the rechargeable battery to reach the target remaining charge so that charging is completed exactly at the use start time, and creates the charging plan such that charging is not performed until the charging start time.

### (Note 3)

The charging control device according to Note 1 or 2, wherein when taking the deterioration of the rechargeable battery into consideration, the charging plan updating unit creates the charging plan so that variation in the remaining charge per unit time during the charging period does not exceed a predetermined threshold.

### (Note 4)

The charging control device according to any of Notes 1 to 3, further including a power consumption prediction unit that predicts a power amount to be consumed by the electric vehicle during a following journey,
wherein the charging plan updating unit determines the target remaining charge on the basis of the predicted power amount.

### (Note 5)

The charging control device according to any of Notes 1 to 4, wherein the charging plan updating unit creates charging plans for a plurality of rechargeable batteries,
creates a resource plan including a relationship between time and a power amount required to execute the charging plans of the respective rechargeable batteries, and
when the created resource plan exceeds a usable power amount, corrects the resource plan and recreates charging plans of the respective rechargeable batteries in accordance with the corrected resource plan.

### (Note 6)

A charging control method including the steps of:
obtaining a remaining charge of a rechargeable battery for an electric vehicle;
obtaining lifespan information expressing a degree of deterioration of the rechargeable battery;
obtaining information indicating a peripheral temperature of the electric vehicle; and
creating a charging plan including a target remaining charge of the rechargeable battery and a charging process up to achievement of the target remaining charge,
wherein, in the step of creating the charging plan, a determination is made on the basis of the lifespan information as to whether or not to create the charging plan in consideration of the deterioration of the rechargeable battery, and
after determining to take the deterioration of the rechargeable battery into consideration, the charging plan is created such that when the temperature is equal to or higher than a predetermine value, the remaining charge of the rechargeable battery is maintained at or below a predetermined value for as long as possible during a charging period.

### (Note 7)

A program for causing a computer to function as:
a remaining charge acquisition unit that obtains a remaining charge of a rechargeable battery for an electric vehicle;
a lifespan information acquisition unit that obtains lifespan information expressing a degree of deterioration of the rechargeable battery;
an environmental information acquisition unit that obtains information indicating a peripheral temperature of the electric vehicle; and
a charging plan updating unit that creates a charging plan including a target remaining charge of the rechargeable battery and a charging process up to achievement of the target remaining charge,
wherein the charging plan updating unit determines whether or not to create the charging plan in consideration of the deterioration of the rechargeable battery on the basis of the lifespan information, and
after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.

The present invention is suitable for performing charging while taking into consideration the prevention of deterioration of a rechargeable battery.

- 1: charging control device
- 2: charger
- 3: server
- 4: rechargeable battery
- 101: battery remaining charge acquisition unit
- 102: use start time prediction unit
- 103: power consumption prediction unit
- 104: lifespan information acquisition unit
- 105: environmental information acquisition unit
- 106: charging plan updating unit
- 107: resource plan storage unit
- 108: charging plan storage unit
- 109: power adjustment unit

## Claims

1. A charging control device comprising:
a remaining charge acquisition unit that obtains a remaining charge of a rechargeable battery for an electric vehicle;
a lifespan information acquisition unit that obtains lifespan information expressing a degree of deterioration of the rechargeable battery;
an environmental information acquisition unit that obtains information indicating a peripheral temperature of the electric vehicle; and
a charging plan updating unit that creates a charging plan inluding a target remaining charge of the rechargeable battery and a charging process up to achievement of the target remaining charge,
wherein the charging plan updating unit determines whether or not to create the charging plan in consideration of the deterioration of the rechargeable battery on the basis of the lifespan information, and
after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.

2. The charging control device according to claim 1, further comprising a use start time prediction unit that predicts a use start time of the electric vehicle,
wherein, when the charging plan updating unit determines to take the deterioration of the rechargeable battery into consideration and the temperature is equal to or higher than the predetermined value, the charging plan updating unit calculates a charging start time from a charging time required for the rechargeable battery to reach the target remaining charge so that charging is completed exactly at the use start time, and creates the charging plan such that charging is not performed until the charging start time.

3. The charging control device according to claim 1 or 2, wherein when taking the deterioration of the rechargeable battery into consideration, the charging plan updating unit creates the charging plan so that variation in the remaining charge per unit time during the charging period does not exceed a predetermined threshold.

4. The charging control device according to any of claims 1 to 3, further comprising a power consumption prediction unit that predicts a power amount to be consumed by the electric vehicle during a following journey,
wherein the charging plan updating unit determines the target remaining charge on the basis of the predicted power amount.

5. The charging control device according to any of claims 1 to 4, wherein the charging plan updating unit creates charging plans for a plurality of rechargeable batteries,
creates a resource plan including a relationship between time and a power amount required to execute the charging plans of the respective rechargeable batteries, and
when the created resource plan exceeds a usable power amount, corrects the resource plan and recreates charging plans of the respective rechargeable batteries in accordance with the corrected resource plan.

6. A charging control method comprising the steps of:
obtaining a remaining charge of a rechargeable battery for an electric vehicle;
obtaining lifespan information expressing a degree of deterioration of the rechargeable battery;
obtaining information indicating a peripheral temperature of the electric vehicle; and
creating a charging plan including a target remaining charge of the rechargeable battery and a charging process up to achievement of the target remaining charge,
wherein, in the step of creating the charging plan, a determination is made on the basis of the lifespan information as to whether or not to create the charging plan in consideration of the deterioration of the rechargeable battery, and
after determining to take the deterioration of the rechargeable battery into consideration, the charging plan is created such that when the temperature is equal to or higher than a predetermined value, the remaining charge of the rechargeable battery is maintained at or below a predetermined value for as long as possible during a charging period.

7. A program for causing a computer to function as:
a remaining charge acquisition unit that obtains a remaining charge of a rechargeable battery for an electric vehicle;
a lifespan information acquisition unit that obtains lifespan information expressing a degree of deterioration of the rechargeable battery;
an environmental information acquisition unit that obtains information indicating a peripheral temperature of the electric vehicle; and
a charging plan updating unit that creates a charging plan including a target remaining charge of the rechargeable battery and a charging process up to achievement of the target remaining charge,
wherein the charging plan updating unit determines whether or not to create the charging plan in consideration of the deterioration of the rechargeable battery on the basis of the lifespan information, and
after determining to take the deterioration of the rechargeable battery into consideration, creates the charging plan such that when the temperature is equal to or higher than a predetermined value, the remaining charge of the rechargeable battery is maintained at or below a predetermined value for as long as possible during a charging period.
